# EUROPÄISCHE PATENTSCHRIFT

(11) **EP 3 713 682 B1**
(45) Veröffentlichungstag und Bekanntmachung des Hinweises auf die Patenterteilung: **10.05.2023**
(21) Anmeldenummer: 18807262.3
(22) Anmeldetag: 19.11.2018
(51) Int. Cl.: B06B 3/02

(54) **ULTRASCHALLSCHWINGEINHEIT MIT DÄMPFUNG**
ULTRASONIC VIBRATING UNIT WITH DAMPING
UNITÉ DE VIBRATION ULTRASONORE AVEC AMORTISSEMENT

(30) Priorität: 24.11.2017 DE 102017127826
(43) Veröffentlichungstag der Anmeldung: 30.09.2020
(73) Patentinhaber: Herrmann Ultraschalltechnik GmbH & Co. KG, 76307 Karlsbad (DE)
(72) Erfinder: ERTZ, Gabriel, 30453 Hannover (DE); TWIEFEL, Jens, 30159 Hannover (DE); WALLASCHEK, Jörg, 30161 Hannover (DE); VOGLER, Ulrich, 88690 Uhldingen-Mühlhofen (DE)
(74) Vertreter: WSL Patentanwälte Partnerschaft mbB
(86) Internationale Anmeldenummer: PCT/EP2018/081686
(87) Internationale Veröffentlichungsnummer: WO 2019/101666

(56) Entgegenhaltungen:
- DE-U1- 8 617 264
- JP-A- 2001 030 087
- US-A- 4 647 336
- US-A1- 2010 006 235
- US-A1- 2016 023 297

## Beschreibung

Die vorliegende Erfindung betrifft eine Ultraschallschwingeinheit mit mindestens einem Konverter zur Umwandlung einer elektrischen Wechselspannung in eine mechanische Ultraschallschwingung und einer Sonotrode, die mit dem Konverter schwingungsgekoppelt ist. Dabei kann die Schwingungskopplung entweder dadurch erfolgen, dass der Konverter direkt an der Sonotrode befestigt ist, oder durch Zwischenschaltung eines Amplitudentransformators.

Eine solche Ultraschallschwingeinheit kann zum Schweißen verschiedenster Materialien eingesetzt werden. Dabei wird die Sonotrode mit dem zu bearbeitenden Material in Kontakt gebracht, so dass die Sonotrode eine Ultraschallschwingung auf das zu bearbeitende Material überträgt. In der Regel wird dazu das zu bearbeitende Material zwischen der Sonotrode und einem Gegenwerkzeug positioniert, so dass die Sonotrode das Material in der Richtung des Gegenwerkzeuges mit einer Kraft beaufschlagt. Ein Beispiel einer solchen Vorrichtung ist in US 2016/023297 gezeigt.

Häufig werden die Komponenten der Ultraschallschwingeinheit: Konverter, Amplitudentransformator und Sonotrode entlang einer ausgezeichneten Längsachse angeordnet.

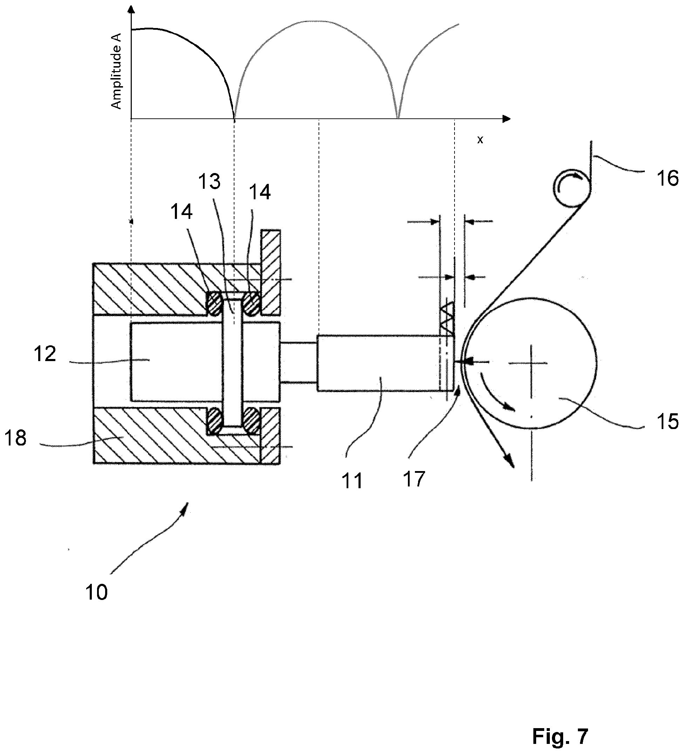

Beispielhaft ist in Figur 7 eine bekannte Ausführungsform einer Ultraschallschwingeinheit 10 dargestellt. Diese besteht aus einem Konvertergehäuse 18, dem Konverter 12, welcher ein piezoelektrisches Schwingmodul aufweist, und einer Sonotrode 11, die am Konverter 12 befestigt ist. Der Konverter 12 hat einen Flansch 13, welcher über elastische O-Ringe in dem Konvertergehäuse 18 weich gelagert ist. Gegenüber liegend von der Sonotrode 11 ist ein Gegenwerkzeug 15 angeordnet. Zwischen Sonotrode 11 und gegen Werkzeug 15 verbleibt ein Spalt 17, durch den eine Materialbahn 16, die mittels der Ultraschallschwingeinheit 10 bearbeitet werden soll, hindurch bewegt wird.

Um eine Ultraschallschwingungen mit möglichst großer Amplitude zu erzeugen, muss die Sonotrode mit einer Anregungsfrequenz angeregt werden, die nahe einer Resonanzfrequenz der Sonotrode liegt. Häufig werden die Resonanzfrequenzen der Sonotrode auch als Eigenfrequenzen bezeichnet.

Üblicherweise wird der Konverter mit einer Arbeitsfrequenz betrieben, die nahezu gleich der Eigenfrequenz f der Sonotrode ist. Der Konverter selber wird zumeist durch das Anlegen einer Wechselspannung an im Konverter befindliche piezoelektrische Elemente in Schwingung versetzt. Die Arbeitsfrequenz, bei der der Konverter schwingt, wird somit durch die angelegte Frequenz einer Wechselspannung kontrolliert. Die einzelnen Komponenten der Ultraschallschwingeinheit sind derart aufeinander abgestimmt, dass das gesamte Schwingsystem eine Eigenfrequenz hat, die der Eigenfrequenz der Sonotrode entspricht. Bei der Anregung der Ultraschallschwingeinheit mit dieser Eigenfrequenz bildet sich eine stehende Longitudinalwelle in der gesamten Ultraschallschwingeinheit mit ortsfesten Schwingungsknoten und Schwingungsbäuchen aus, wobei die mit der stehenden Welle verbundenen Schwingungen die Arbeitsfrequenz besitzen.

Um dies zu verdeutlichen, ist oberhalb der Figur 7 ein Graph dargestellt, der den Betrag der Schwingungsamplitude in Abhängigkeit von der Position darstellt. Man erkennt, dass die Schwingungsamplitude sowohl am rechten Ende der Ultraschallschwingeinheit 10, welches mit der Materialbahnen 16 in Kontakt tritt, als auch am linken Ende der Ultraschallschwingeinheit 10 ein Maximum zeigt. Im Bereich des Flansches 13 ist die Schwingungsamplitude minimal. Ein weiterer Schwingungsknoten befindet sich in der Sonotrode 11.

Durch die Anordnung des Flansches 13 im Schwingungsknoten wird erreicht, dass der Flansch 13 nur geringfügig in Ausbreitungsrichtung der Ultraschallschwingung schwingt.

Durch die weiche Lagerung mittels der O-Ringe 14 wird die Ultraschallschwingeinheit 10 von dem Konvertergehäuse 18 entkoppelt, sodass praktisch keine Schwingungsenergie von der Ultraschallschwingeinheit 10 auf das Konvertergehäuse 18 übertragen wird.

Bei der Verwendung einer Ultraschallschwingeinheit in einem Ultraschallschweißgerät kommt es beim Ultraschallschweißen dünner Materialien, wie zum Beispiel beim Schweißen von Salatbeuteln, durch Wechselwirkungseffekte mit dem zu schweißenden Material oder/und einem dazu verwendeten Schweißamboss auch zu Anregungen von unerwünschten parasitären Schwingungen, die zusätzliche longitudinale Schwingungen in der Ultraschallschwingeinheit erzeugen. Diese parasitären Schwingungen besitzen erfahrungsgemäß meist eine Frequenz, die niedriger ist als die Arbeitsfrequenz.

Insbesondere beim Ultraschallschweißen können diese niederfrequenten parasitären Schwingungen eine verminderte Qualität des Schweißergebnisses verursachen. Sie können außerdem eine übermäßige Beanspruchung der Komponenten des Ultraschallschweißgerätes, insbesondere der Piezo-Elementen des Konverter, verursachen sowie für einen erhöhten Energiebedarf verantwortlich sein. Darüber hinaus verursachen die parasitären Schwingungen eine erhöhte Lärmentwicklung, die unerwünscht ist.

Es ist daher Aufgabe der vorliegenden Erfindung, eine Ultraschallschwingeinheit bereitzustellen, bei der die üblicherweise im Betrieb mit einer Arbeitsfrequenz auftretenden parasitäre Schwingungen gering sind oder nicht auftreten, wobei gleichzeitig die eigentliche Arbeitsschwingung nicht abgeschwächt wird.

Erfindungsgemäß wird diese Aufgabe dadurch gelöst, dass eine gedämpfte Schwingungstilgereinheit vorgesehen ist, die an einem Schwingungsknoten mit der Ultraschallschwingeinheit verbunden ist, wobei die Schwingungstilgereinheit mit einem Dämpfungselement verbunden ist, welches derart ausgebildet ist, dass es eine Schwingung der Schwingungstilgereinheit dämpft.

Unter einer Schwingungstilgereinheit wird jede Einheit verstanden, die zur Schwingung angeregt werden kann. Es ist nicht notwendig, auch wenn dies vorteilhaft sein kann, dass die Schwinungstilgereinheit eine auf bestimmte Frequenzen angepasste Resonanzfrequenz aufweist. Aufgrund des Verbindens der Schwingungstilgereinheit mit Dämpfungselementen, wird die Schwingungstilgereinheit auch als gedämpfte Schwingungstilgereinheit bezeichnet.

Der Vorteil der Verwendung dieser gedämpften Schwingungstilgereinheit besteht darin, dass eine gewünschte longitudinale Arbeitsschwingung des Konverters mit der Arbeitsfrequenz durch die Dämpfungselemente nicht gedämpft wird, während die niederfrequente parasitäre Schwingung gedämpft wird. Dies wird dadurch ermöglicht, dass die Dämpfungselemente sich an der Schwingungstilgereinheit befinden, welche mit der Ultraschallschwingeinheit an einem Schwingungsknoten der stehenden Welle der Arbeitsschwingung verbunden ist. Da jedoch an dem Schwingungsknoten der stehenden Welle der gewünschten Arbeitsschwingung praktisch keine Schwingungsanteile der gewünschten Arbeitsschwingung auf die Schwingungstilgereinheit übertragen werden, wird die Arbeitsschwingung durch die Dämpfung der Schwingungstilgereinheit auch nicht beeinflusst. Die erfindungsgemäße Verbindung über ein an einem Schwingungsknoten angeordnetes Kopplungselement ermöglicht, dass lediglich Schwingungsanteile im Bereich des Schwingungsknoten auf die Schwingungstilgereinheit übertragen und dort gedämpft werden. Dies sind jedoch im Wesentlichen die unerwünschten parasitären Schwingungen. Deshalb wird die Arbeitsschwingung durch die gedämpfte Schwingungstilgereinheit kaum beeinflusst.

Im Grunde genommen kann man den erfindungsgemäßen Aufbau mit einem elektromagnetischen Sperrkreis vergleichen. Ein Sperrkreis verhindert die Übertragung von Signalen einer ausgezeichneten Frequenz, während Signale aller anderen Frequenzen nahezu unbeeinflusst übertragen werden.

In gleicher weise erlaubt die Anordnung des Kopplungselementes die Übertragung und damit den Energieübertrag von Schwingungen, die keinen Schwingungsknoten im Bereich des Kopplungselementes aufweisen. Alle Schwingungen, die einen Schwingungsknoten im Bereich des Kopplungselementes aufweisen, werden gesperrt, das heißt nicht über das Kopplungselement auf die Schwingungstilgereinheit übertragen.

Der Schwingungstilgereinheit wird somit eine erzwungene Schwingung aufgeprägt, deren Schwingungsfrequenz sich von der Eigenfrequenz f bzw. der Arbeitsfrequenz der Ultraschallschwingeinheit unterscheidet. Aufgrund der Schwingung der Schwingungstilgereinheit wird Schwingungsenergie von der Schwingungstilgereinheit auf das Dämpfungselement übertragen und beispielsweise in Wärmeenergie transformiert.

Die vorliegende Erfindung nutzt somit die Erkenntnis, dass stehende Wellen innerhalb einer Ultraschallschwingeinheit bezüglich unterschiedlicher Frequenzen, an unterschiedlichen Stellen Schwingungsknoten und Schwingungsbäuche aufweisen.

Es versteht sich, dass die beschriebene stehende Welle mit Schwingungsknoten und Schwingungsbäuchen eine physikalische Idealvorstellung ist, die in der Praxis nicht erreicht wird. In Abhängigkeit von der tatsächlichen Geometrie der Ultraschallschwingung und insbesondere der Sonotrode bilden sich jedoch in jedem Fall Bereiche mit minimaler Schwingungsamplitude und Bereiche mit maximaler Schwingungsamplitude aus. Unter einem Schwingungsknoten im Sinne der vorliegenden Erfindung wird daher immer ein Bereich mit minimaler Schwingungsamplitude verstanden. Insoweit das Kupplungselement an einem Schwingungsknoten mit der Ultraschallschwingeinheit verbunden sein soll, bedeutet dies lediglich, dass das Kupplungselement in einem Bereich mit minimaler Schwingungsamplitude angeordnet sein soll. Es versteht sich darüber hinaus, dass das Kopplungselement in Richtung der stehenden Welle eine endliche Ausdehnung hat und daher nicht punktförmig an der Ultraschallschwingungseinheit angreifen kann.

In einer bevorzugten Ausführungsform besteht das Dämpfungselement aus einem anderen Material als die Schwingungstilgereinheit. Dabei besteht das Dämpfungselement vorzugsweise aus einem Elastomer. Es hat sich gezeigt, dass sich Elastomere besonders gut eignen um die gewünschte Dämpfung der Schwingungstilgereinheit zu bewirken. Die Verwendung eines Elastomers als Dämpfungselement ist darüber hinaus sowohl kostengünstig als auch einfach. Eine Verbindung eines Elastomers mit der Schwingungstilgereinheit kann z.B. durch Klemmen oder Vergießen verwirklicht werden.

In einer weiteren bevorzugten Ausführungsform weist das aus einem Elastomer bestehende Dämpfungselement eine Kontaktfläche auf, über die es mit der Schwingungstilgereinheit in Kontakt steht, wobei die Kontaktfläche vorzugsweise > 2 cm², besonders bevorzugt > 10 cm² und am besten > 20 cm² ist. Eine genügend große Kontaktfläche zwischen der Schwingungstilgereinheit und einem Elastomer, wie sie hier beschrieben ist, sorgt dafür, dass die Schwingungsenergie von der Schwingungstilgereinheit effizient auf das Elastomer übertragen und von diesem in Wärmeenergie umgewandelt werden kann.

In einer besonders bevorzugten Ausführungsform ist das aus einem Elastomer bestehende Dämpfungselement derart angeordnet, dass es über die genannte Kontaktfläche eine Kraft auf die Schwingungstilgereinheit ausübt, wobei vorzugsweise das Dämpfungselement über die Kontaktfläche eine Kraft in Richtung auf die Schwingungstilgereinheit ausübt. Der hier beschriebene Kraft-übertrag kann beispielsweise durch Spannringe, die ein Elastomer auf bzw. an die Schwingungstilgereinheit drücken, realisiert werden. Daraus resultiert eine vorteilhafte Ankopplung des Dämpfungselements an die Schwingungstilgereinheit, wodurch es zu einem effizienten Übertrag der Schwingungsenergie von der Schwingungstilgereinheit an das Dämpfungselement kommt.

In einer weiteren bevorzugten Ausführungsform besitzt die Schwingungstilgereinheit eine Masse, die < 10 %, vorzugsweise zwischen 1 % und 8 % und am besten zwischen 3 % und 5 % der Masse der Ultraschallschwingeinheit ist.

In einer weiteren bevorzugten Ausführungsform ist das Dämpfungselement derart ausgebildet und angeordnet, so dass es die Schwingungstilgereinheit mit einem Dämpfungsgrad zwischen 5 % und 50 % und vorzugsweise zwischen 7,5 % und 20 % dämpft. Der Dämpfungsgrad ist eine dimensionslose Größe, die ein Maß für die Dämpfung der Schwingungstilgereinheit darstellt. Der Dämpfungsgrad wird teilweise auch als Dämpfungsmaß bzw. Lehrsches Dämpfungsmaß bezeichnet.

In einer besonders bevorzugten Ausführungsform ist das Kopplungselement an dem Konverter der Ultraschallschwingeinheit angeordnet.

Die Ultraschallschwingeinheit ist bei dieser Ausführungsform derart ausgebildet, dass ein Schwingungsknoten der Arbeitsschwingung im Bereich des Konverter liegt. Beispielsweise kann die Ultraschallschwingeinheit zwei Schwingungsknoten und drei Schwingungsbäuche ausbilden, wobei ein Schwingungsknoten im Bereich des Konverter und ein Schwingungsknoten im Bereich der Sonotrode angeordnet ist.

Die Anordnung des Kopplungselementes an einem Schwingungsknoten, welcher im Bereich des Konverter liegt, hat zum einen den Vorteil, dass in diesem Bereich die Schwingungsamplitude der gewünschten Ultraschallschwingung geringer ist als im Bereich der Sonotrode, so dass der Energieübertrag aus der gewünschten Schwingung auf die Schwingungstilgereinheit noch weiter reduziert wird. Zum anderen haben Versuche und Simulationsberechnungen gezeigt, dass die Schwingungsamplitude der parasitären Schwingung im Bereich des Konverter größer ist als im Bereich der Sonotrode, so dass der Energieübertrag der parasitären Schwingung auf die Schwingungstilgereinheit im Bereich des Konverter größer ist.

Ziel der Ankopplung der gedämpften Schwingungstilgereinheit über eine Kopplungselement ist es, möglichst viel Energie aus der parasitären Schwingung auf die Schwingungstilgereinheit zu übertragen und zugleich möglichst wenig Schwingungsenergie aus der gewünschten Arbeitsschwingung auf die Schwingungstilgereinheit zu übertragen.

In einer weiteren besonders bevorzugten Ausführungsform besitzt der Konverter eine zylindermantelförmige Außenfläche und das Kopplungselement ist zumindest abschnittsweise als Flansch ausgebildet, der mit der zylindermantelförmigen Außenfläche des Konverters verbunden ist. Dabei ist der Flansch vorzugsweise einstückig mit dem Konverter ausgebildet. Die Ausformung des Kopplungselements als Flansch ist eine einfach herzustellende und kostengünstige Variante. Insbesondere stellt ein Flansch ein ideales Kopplungselement zur Kopplung des Konverters an eine zylinderförmige Schwingungstilgereinheit dar.

In einer alternativen bevorzugten Ausführungsform ist das Kopplungselement derart ausgebildet, dass es einen zettelförmigen Querschnitt aufweist. Mit anderen Worten weist das Kopplungselement drei Abschnitt auf, nämlich einen sich radial zur Zylindermantelachse erstreckenden ersten Radialabschnitt, der an dem Konverter herangereift, einen sich hierzu in axialer Richtung erstreckenden Axialabschnitt und einen sich vom axialer Abschnitt in radialer Richtung erstreckenden zweiten Radialabschnitt.

In einer besonders bevorzugten Ausführungsform ist die Schwingungstilgereinheit mit dem Konverter verbunden und bildet ein Konvertergehäuse aus, das den Konverter an seinem der Sonotrode abgewandten Ende umschließt. Vorzugsweise weist das Konvertergehäuse ein Gehäuseboden und eine zylindrische Gehäusewand auf, wobei die zylindrische Gehäusewand mit dem Kopplungselement verbunden ist. Die Verwendung der Schwingungstilgereinheit als Konvertergehäuse ist besonders vorteilhaft, da die Schwingungstilgereinheit somit gleichzeitig zwei wichtige Funktionen erfüllt. Einerseits schützt sie den Konverter und die damit verbundene Elektronik vor äußeren Einflüssen und andererseits stellt sie die Möglichkeit her, durch das Anbringen von Dämpfungselementen an der Schwingungstilgereinheit eine im Betrieb auftretende parasitäre Schwingung effizient zu dämpfen.

In einer weiteren bevorzugten Ausführungsform ist das Dämpfungselement als Hülse ausgebildet, welche das Konvertergehäuse umgibt. Dabei ist das Dämpfungselement derart elastisch vorgespannt, so dass es eine Kraft auf das Konvertergehäuse ausübt. In diesem Fall kann als Dämpfungselement beispielsweise eine Elastomerhülse verwendet werden, wobei der Durchmesser der Elastomerhülse im nicht ausgedehnten Zustand kleiner ist als der Durchmesser des zylinderförmigen Konvertergehäuses. Wird die Elastomerhülse nun über das Konvertergehäuse gestülpt, so wirkt durch die Elastizität des Elastomers eine Kraft vom Elastomer auf das Konvertergehäuse. Besonders vorteilhaft an dieser Ausführungsform ist die einfache Umsetzbarkeit.

In einer alternativen Ausführungsform ist das Dämpfungselement innerhalb des Konvertergehäuses angeordnet. Insbesondere ist das Dämpfungselement in diesem Fall entweder über die gesamte Kontaktfläche mit dem Konvertergehäuse verbunden oder wird mit Hilfe eines Klemm-Elements an das Konvertergehäuse gepresst. Diese Ausführungsform hat den Vorteil, dass das Dämpfungselement selber durch das Konvertergehäuse von der Umgebung geschützt wird und somit Umgebungseinflüsse auf das Dämpfungselement minimiert werden.

In einer weiteren alternativen Ausführungsform wird ein aus einem Elastomer bestehendes Dämpfungselement mithilfe eines Klemm-Elements an die Innenwand des Konvertergehäuses gepresst, wobei das Klemmelement eine konusförmige Außenkontur aufweist. Das Dämpfungselement ist hülsenförmig ausgebildet und weist eine konusförmige Innenkontur auf, die korrespondierend zu der Außenkontur des Klemmelementes ausgebildet ist. Durch eine Bewegung des Klemmelementes relativ zum Konvertergehäuse in Richtung der Konusachse wird das Dämpfungselement zwischen dem Klemmelement und dem Konvertergehäuse eingeklemmt und somit die erwünschte Dämpfungswirkung erzielt.

Beispielsweise kann eine Hülse aus Elastomer und eine Metallhülse mit einer konusförmigen Außenkontur als Klemmelement verwendet werden. Die Installation einer solchen Lösung erweist sich als einfach und kann wie im Folgenden beschrieben erfolgen. Beide Hülsen werden in ein zylindrisch ausgeformtes Konvertergehäuse geschoben, wobei der Zylinderboden für diese Zwecke geöffnet werden muss. Zunächst wird die Elastomerhülse hineingeschoben und dann die Metallhülse, die aufgrund der konusförmigen Ausbildung ihrer Außenkontur, die Elastomerhülse gegen die Innenwand des Konvertergehäuse presst. Dabei ist die konusförmige Außenkontur der Metallhülse derart ausgebildet, dass eine stabile Verpressung des Elastomers genau dann erreicht ist, wenn sie Metallhülse vollständig in das Konvertergehäuse geschoben wurde.

Weitere Vorteile, Merkmale und Anwendungsmöglichkeiten der vorliegenden Erfindung werden deutlich anhand der folgenden Beschreibung bevorzugter Ausführungsformen. Es zeigen:
- Figur 1:: eine Schnittansicht einer an einem Konverter befestigten Schwingungstilgereinheit einer ersten Ausführungsform der Erfindung,
- Figur 2:: eine Schnittansicht einer an einem Konverter befestigten Schwingungstilgereinheit einer zweiten Ausführungsform der Erfindung,
- Figur 3:: eine Schnittansicht einer an einem Konverter befestigten Schwingungstilgereinheit einer dritten Ausführungsform der Erfindung,
- Figur 4:: eine Schnittansicht einer an einem Konverter befestigten Schwingungstilgereinheit einer vierten Ausführungsform der Erfindung,
- Figur 5:: eine Schnittansicht einer an einem Konverter befestigten Schwingungstilgereinheit einer fünften Ausführungsform der Erfindung,
- Figur 6:: eine Schnittansicht einer alternativen Ausführungsform eines Kopplungselement und
- Figur 7:: eine schematische Darstellung einer Ultraschallschwingeinheit des Standes der Technik.

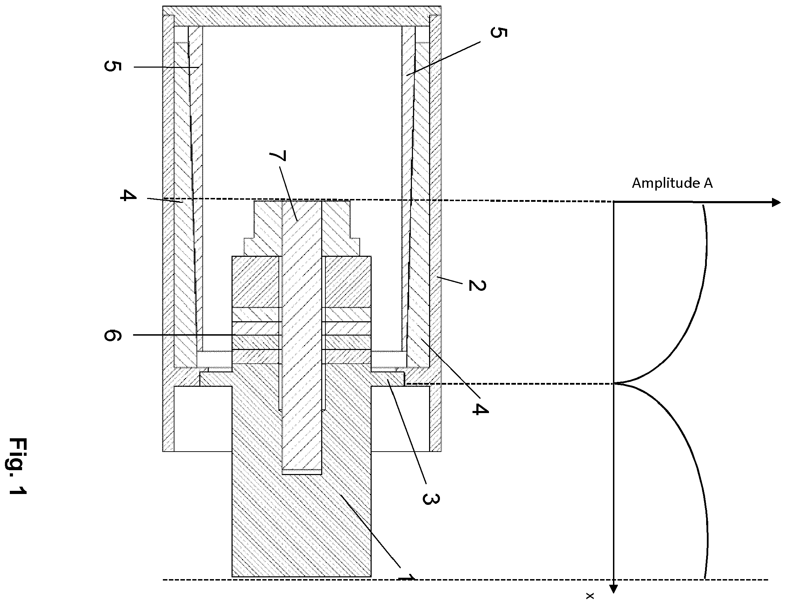

In Figur 1 ist eine erste Ausführungsform einer an einem Konverter befestigten Schwingungstilgereinheit gezeigt. Zu sehen ist eine Schnittansicht durch den Konverter 1 der mit einer Schwingungstilgereinheit 2 über ein Kopplungselement 3 verbunden ist. Alle gezeigten Elemente sind im vorliegenden Fall zylindersymmetrisch bezüglich der Längsachse des Konverters 1, so dass die vorliegende Schnittansicht jede beliebige Schnittebene darstellt, die die Längsachse des Konverters und des Konvertergehäuses/der Schwingungstilgereinheit beinhaltet.

Obgleich nicht in der Figur dargestellt, ist der Konverter 1 mit einer Sonotrode schwingungsgekoppelt. Dabei kann die Schwingungskopplung entweder dadurch erfolgen, dass die Sonotrode sich in Figur 1 rechts an den Konverter 1 anschließt oder der Konverter 1 an seiner rechten Seite mit einem Amplitudentransformator verbunden ist, an welchem wiederum die Sonotrode befestigt ist.

Die Figur 1 zeigt auch weitere Details des Konverters 1 wie die piezoelektrischen Elemente 6 und die Konverterschraube 7. Das Kopplungselement 3 des Konverters ist als Flansch ausgebildet, an dem die Schwingungstilgereinheit 2 angebracht ist. Die Schwingungstilgereinheit ist hier als Konvertergehäuse 2 ausgebildet und umschließt die in dieser Ansicht linke Hälfte des Konverters 1. An der Innenwand des Konvertergehäuses 2 ist ein hülsenförmiges Dämpfungselement 4 angebracht, das mittels eines konusförmigen Klemmelements 5 an die Innenwand des Konvertergehäuses 2 gedrückt wird. Die durch das Dämpfungselement 4 und das konusförmige Klemmelement 5 gedämpfte Schwingungstilgereinheit 2 ist wie in Figur 1 gezeigt über ein Kopplungselement 3 am Konverter befestigt.

Die Ultraschallschwingeinheit bestehend aus der Sonotrode und dem Konverter 1 und gegebenenfalls einem zwischen Konverter 1 und Sonotrode angeordneten Amplitudentransformator ist derart ausgelegt, dass, wenn sie mit der Ultraschalleigenfrequenz f angeregt wird, sich in Längsrichtung eine stehende Welle ausgebildet. Die Schwingungsamplitude dieser Longitudinalwelle ist ortsabhängig, d.h. es bilden sich innerhalb der Ultraschallschwingeinheit Zonen mit minimaler Schwingungsamplitude und Zonen mit maximaler Schwingungsamplitude aus. Zur Verdeutlichung ist oberhalb der Darstellung des Konverters ein Graph dargestellt, welcher den Betrag der Schwingungsamplitude A über der Längsachse x zeigt. Man erkennt, dass in dem Bereich, in dem das Kopplungselement 3 am Konverter 1 angreift, die Schwingungsamplitude A minimal ist (Schwingungsknoten), während die Schwingungsamplitude in Richtung der stirnseitigen Begrenzungsflächen des Konverter ansteigt. An den Stirnflächen bilden sich somit Schwingungsbäuche.

Die Lage des Kopplungselements 3 ist erfindungsgemäß derart gewählt, dass sie mit der Lage eines Schwingungsknotens übereinstimmt. Dadurch ist sichergestellt, dass kein oder nahezu kein Energieübertrag für die gewünschte Ultraschallschwingung über das Kopplungselement auf die Schwingungstilgereinheit erfolgt. Für den Fall, dass die Ultraschallschwingeinheit parasitäre Schwingungsanteile aufweist, zeigen diese in der Regel keinen Schwingungsknoten an der Position des Kopplungselementes 3, so dass für parasitäre Schwingungsanteile ein Energieübertrag auf die Schwingungstilgereinheit 2 erfolgt.

Das Kopplungselement 3 ist wie in Figur 1 gezeigt in der Form eines Flanschs einteilig mit dem Konverter ausgebildet. In einer alternativen Ausführungsform kann es aber auch als separates Bauteil ausgebildet sein.

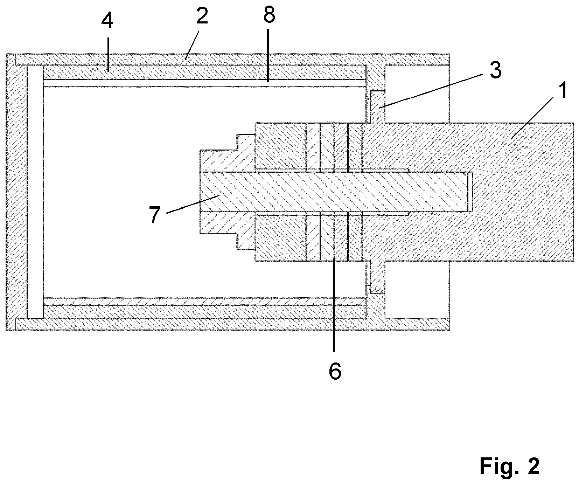

In Figur 2 ist eine Schnittansicht einer zweiten Ausführungsform einer an einem Konverter befestigten Schwingungstilgereinheit gezeigt. Der Konverter 1, das Kopplungselement 3 (der Flansch), sowie die Schwingungstilgereinheit 2 sind hier der ersten Ausführungsform entsprechend ausgebildet. Die gezeigte Schnittebene entspricht der gezeigten Schnittebene aus Figur 1. Das Dämpfungselement 4 ist hier ebenfalls eine Elastomerhülse, die aber im Unterschied zur ersten Ausführungsform in dieser Ausführungsformen mittels eines Spreizrings 8 gegen die Innenwand des Konvertergehäuses 2 gedrückt wird. Der Spreizring 8 übt auf das Dämpfungselement 4 in allen Bereichen, in denen er mit dem Dämpfungselement 4 in Kontakt ist, in etwa die gleiche Kraft aus.

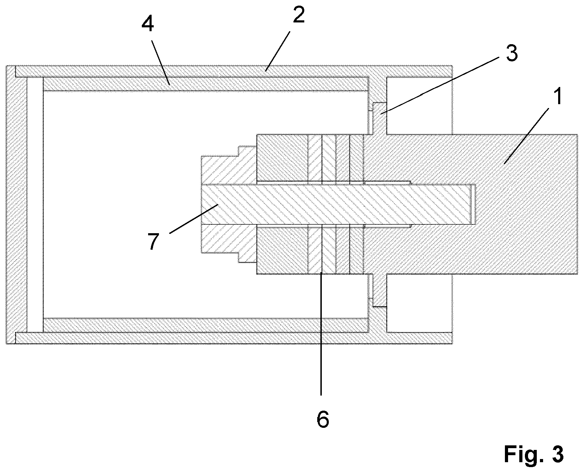

In Figur 3 ist die Schnittansicht einer dritten Ausführungsform einer an einem Konverter befestigten Schwingungstilgereinheit gezeigt. Diese Ausführungsform unterscheidet sich zu der zweiten Ausführungsform (Figur 2) nur dahingehend, dass das Dämpfungselement 4 nicht mittels eines Spreizrings 8 fixiert wird, sondern durch Vergießen an die Innenwand des Konvertergehäuses angebracht wird. Somit enthält diese Ausführungsform kein zusätzliches Klemmelement zur Befestigung des Dämpfungselements 4 an der Schwingungstilgereinheit 2.

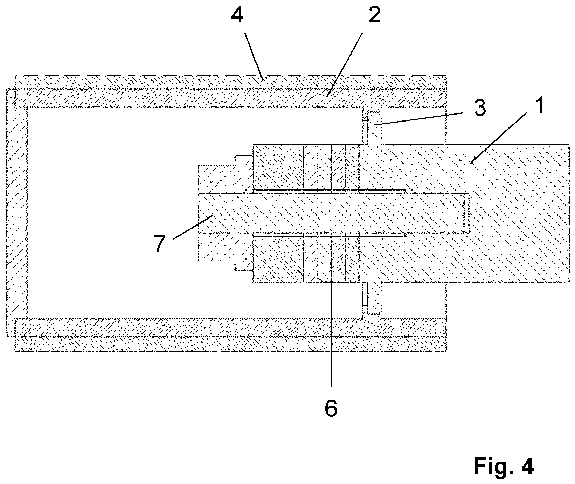

In Figur 4 ist eine vierte Ausführungsform einer an einem Konverter befestigten Schwingungstilgereinheit gezeigt. Diese unterscheidet sich von den vorangegangenen gezeigten Ausführungsformen der Erfindung dahingehend, dass das Dämpfungselement 4 an der Außenseite des Konvertergehäuses 2 angebracht ist. Das Dämpfungselement 4 kann in diesem Fall beispielsweise aus einer elastischen Elastomerhülse bestehen, die ein Untermaß bezüglich des zylinderförmigen Konvertergehäuses 2 besitzt. Wenn eine solche Elastomerhülse 4 wie im vorliegenden Fall über das Konvertergehäuse 2 gestülpt wird, drückt sie aufgrund ihres Untermaßes und ihrer Elastizität mit einer Kraft, die von Untermaß und Elastizität abhängig ist, auf die Außenwand des Konvertergehäuses 2.

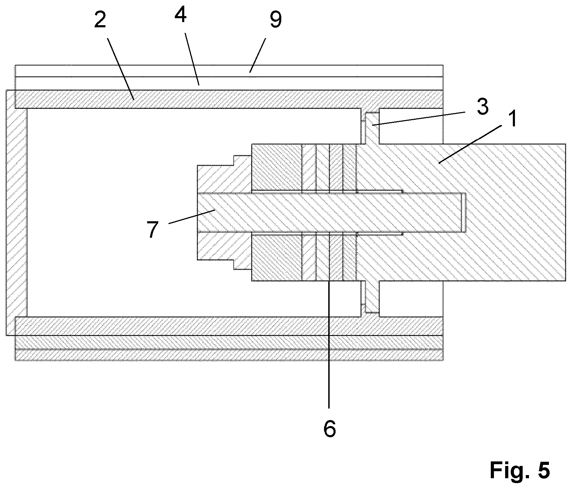

In Figur 5 ist eine fünfte Ausführungsform der Erfindung gezeigt, die sich von der in Figur 4 gezeigten Ausführungsform dahingehend unterscheidet, dass das Dämpfungselement 4, in diesem Fall wieder durch eine Elastomerhülse realisiert, hier an der Außenwand des Konvertergehäuses 2 angebracht ist und mittels Spannringen 8 gegen das Konvertergehäuse 2 gedrückt wird. Somit wird auch in dieser Ausführungsformen genauso wie in der vierten Ausführungsform ein Dämpfungselement 4 mit einer Kraft gegen die Außenwand des Konvertergehäuses 2 gedrückt, wobei hier das Dämpfungselement 4 kein Untermaß besitzen muss, da die Kraft durch die Verspannung mittels der Spannringe 8 aufgebracht wird.

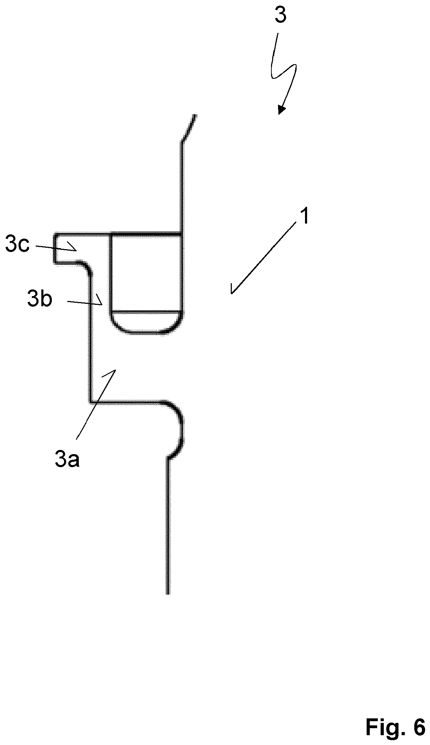

In Figur 6 ist eine Teilschnittansicht einer alternativen Ausführungsform eines Kopplungselementes 3 dargestellt. Das Kopplungselement 3 ist einstückig mit dem Konverter 1 verbunden und weist einen ersten Radialabschnitt 3a, der sich im Wesentlichen radial von der zylinderförmigen Außenkontur des Konverters 1 erstreckt, einen Axialabschnitt 3b, der sich im Wesentlichen senkrecht zu dem ersten Radialabschnitt 3a und damit im Wesentlichen axial erstreckt, und einen zweiten Radialabschnitt 3c, der sich radial von dem Axialabschnitt 3b erstreckt, auf. Der zweite Radialabschnitt 3c kann dann mit der Schwingungstilgereinheit bzw. dem als Schwingungstilgereinheit ausgebildeten Konvertergehäuse verbunden sein.

### Bezugszeichenliste

- 1: Konverter
- 2: Schwingungstilgereinheit/Konvertergehäuse
- 3, 3a-c: Kopplungselement
- 4: Dämpfungselement
- 5: Konusförmiges Klemmelement
- 6: Piezo-elektrische Elemente
- 7: Konverterschraube
- 8: Spreizring
- 9: Spannring
- 10: Ultraschallschwingeinheit
- 11: Sonotrode
- 12: Konverter
- 13: Flansch
- 14: O-Ring
- 15: Gegenwerkzeug
- 16: Materialbahn
- 17: Spalt
- 18: Konvertergehäuse

## Patentansprüche

1. Ultraschallschwingeinheit,
welche einen Konverter (1) zur Umwandlung einer elektrischen Wechselspannung in eine mechanische Ultraschallschwingung und eine Sonotrode, die mit dem Konverter (1) schwingungsgekoppelt ist, aufweist, wobei Sonotrode und Konverter (1) derart aufeinander abgestimmt sind, dass die Ultraschallschwingeinheit mit einer Eigenfrequenz f schwingen kann, bei der sich innerhalb der Ultraschallschwingeinheit eine stehende Longitudinalwelle mit zumindest einem Schwingungsknoten und zumindest zwei Schwingungsbäuchen ausbildet, **dadurch gekennzeichnet, dass** eine gedämpfte Schwingungstilgereinheit (2) vorgesehen ist, welche über ein Kopplungselement (3) mit der Ultraschallschwingeinheit verbunden ist, wobei das Kopplungselement (3) an einem Schwingungsknoten mit der Ultraschallschwingeinheit verbunden ist, wobei die Schwingungstilgereinheit (2) mit einem Dämpfungselement (4) verbunden ist, welches derart ausgebildet ist, dass es eine Schwingung der Schwingungstilgereinheit (2) dämpft.

2. Ultraschallschwingeinheit nach Anspruch 1, **dadurch gekennzeichnet, dass** das Dämpfungselement (4) aus einem anderen Material besteht als die Schwingungstilgereinheit (2), wobei das Dämpfungselement (4) vorzugsweise aus einem Elastomer besteht.

3. Ultraschallschwingeinheit nach Anspruch 2, **dadurch gekennzeichnet, dass** das Dämpfungselement (4) einer Kontaktfläche aufweist, mit der das Dämpfungselement (4) mit der Schwingungstilgereinheit (2) in Kontakt steht, wobei die Kontaktfläche vorzugsweise größer als 2 cm², besonders bevorzugt größer als 10 cm² und am besten größer als 20 cm² ist.

4. Ultraschallschwingeinheit nach Anspruch 3, **dadurch gekennzeichnet, dass** das Dämpfungselement (4) derart angeordnet ist, dass es über die Kontaktfläche eine Kraft auf die Schwingungstilgereinheit (2) ausübt, wobei vorzugsweise das Dämpfungselement (4) über die Kontaktfläche eine Kraft in Richtung auf die Schwingungstilgereinheit (2) ausübt.

5. Ultraschallschwingeinheit nach einem der Ansprüche 1-4, **dadurch gekennzeichnet, dass** die Masse der Schwingungstilgereinheit (2) kleiner als 10 %, vorzugsweise zwischen einem Prozent und 8 % und am besten zwischen 3 und 5 % der Masse der Ultraschallschwingeinheit beträgt.

6. Ultraschallschwingeinheit nach einem der Ansprüche 1-5, **dadurch gekennzeichnet, dass** das Dämpfungselement (4) derart ausgebildet und angeordnet ist, dass es die Schwingungstilgereinheit (2) mit einem Dämpfungsgrad zwischen 5 % und 50 % und vorzugweise zwischen 7,5 % und 20% dämpft.

7. Ultraschallschwingeinheit nach einem der Ansprüche 1-6, **dadurch gekennzeichnet, dass** das Kopplungselement (3) an dem Konverter (1) angeordnet ist.

8. Ultraschallschwingeinheit nach Anspruch 7, **dadurch gekennzeichnet, dass** der Konverter (1) eine zylindermantelförmige Außenfläche hat, wobei das Kopplungselement (3) zumindest abschnittsweise als Flansch ausgebildet ist, der mit der zylindermantelförmigen Außenfläche des Konverter (1) verbunden ist, wobei vorzugsweise der Flansch einstückig mit dem Konverter (1) verbunden ist.

9. Ultraschallschwingeinheit nach Anspruch 7 oder Anspruch 8, wobei die Schwingungstilgereinheit (2) als Konvertergehäuse (2) ausgebildet ist, welches den Konverter (1) an seinem in der Sonotrode abgewandten Ende umschließt, wobei vorzugsweise das Konvertergehäuse (2) einen Gehäuseboden und eine zylindrische Gehäusewand aufweist, wobei die zylindrische Gehäusewand mit dem Kopplungselement (3) verbunden ist.

10. Ultraschallschwingeinheit nach Anspruch 9, **dadurch gekennzeichnet, dass** das Dämpfungselement (4) als Hülse ausgebildet ist, welche das Konvertergehäuse (2) umgibt, wobei vorzugsweise das Dämpfungselement (4) derartige elastisch vorgespannt ist, dass es eine Kraft auf das Konvertergehäuse (2) ausübt.

11. Ultraschallschwingeinheit nach Anspruch 9, **dadurch gekennzeichnet, dass** das Dämpfungselement (4) innerhalb des Konvertergehäuses (2) angeordnet ist und entweder über die gesamte Kontaktfläche mit diesem verbunden ist oder mit Hilfe eines Klemmelementes an die Schwingungstilgereinheit (2) gepresst wird.

12. Ultraschallschwingeinheit nach Anspruch 11, **dadurch gekennzeichnet, dass** das Klemmelement eine konusförmige Außenkontur aufweist und dass ein aus einem Elastomer bestehendes Dämpfungselement eine korrespondierende konusförmige Innenkontur aufweist.

## Claims

1. An ultrasonic vibration unit
which has a converter (1) for converting an electric ac voltage into a mechanical ultrasonic vibration and a sonotrode which is vibrationally coupled to the converter (1), wherein the sonotrode and the converter (1) are matched to each other in such a way that the ultrasonic vibration unit can vibrate with a natural frequency f, in which a standing longitudinal wave with at least one vibration node and at least two vibration anti-nodes is formed within the ultrasonic vibration unit, **characterised in that** there is provided a damped vibration absorber unit (2) connected to the ultrasonic vibration unit by way of a coupling element (3), wherein the coupling element (3) is connected at a vibration node to the ultrasonic vibration unit, wherein the vibration absorber unit (2) is connected to a damping element (4) which is so designed that it damps a vibration of the vibration absorber unit (2).

2. An ultrasonic vibration unit according to claim 1 **characterised in that** the damping element (4) comprises a different material from the vibration absorber unit (2), the damping element (4) preferably comprising an elastomer.

3. An ultrasonic vibration unit according to claim 2 **characterised in that** the damping element (4) has a contact surface with which the damping element (4) is in contact with the vibration absorber unit (2), the contact surface preferably being greater than 2 cm², particularly preferably greater than 10 cm² and best greater than 20 cm².

4. An ultrasonic vibration unit according to claim 3 **characterised in that** the damping element (4) is so arranged that it exerts a force on the vibration absorber unit (2) by way of the contact surface, wherein preferably the damping element (4) exerts a force in a direction towards the vibration absorber unit (2) by way of the contact surface.

5. An ultrasonic vibration unit according to one of claims 1 to 4 **characterised in that** the mass of the vibration absorber unit (2) is less than 10%, preferably between one percent and 8% and best between 3 and 5% of the mass of the ultrasonic vibration unit.

6. An ultrasonic vibration unit according to one of claims 1 to 5 **characterised in that** the damping element (4) is of such a configuration and arrangement that it damps the vibration absorber unit (2) with a degree of damping between 5% and 50% and preferably between 7.5% and 20%.

7. An ultrasonic vibration unit according to one of claims 1 to 6 **characterised in that** the coupling element (3) is arranged at the converter (1).

8. An ultrasonic vibration unit according to claim 7 **characterised in that** the converter (1) has a cylinder-shaped outside surface, wherein the coupling element (3) is at least portion-wise in the form of a flange which is connected to the cylinder-shaped outside surface of the converter (1), wherein preferably the flange is integrally connected to the converter (1).

9. An ultrasonic vibration unit according to claim 7 or claim 8 wherein the vibration absorber unit (2) is in the form of a converter housing (2) which encloses the converter (1) at its end remote from the sonotrode, wherein preferably the converter housing (2) has a housing bottom and a cylindrical housing wall, wherein the cylindrical housing wall is connected to the coupling element (3).

10. An ultrasonic vibration unit according to claim 9 **characterised in that** the damping element (4) is in the form of a sleeve which surrounds the converter housing (2), wherein preferably the damping element (4) is elastically biased in such a way that it exerts a force on the converter housing (2).

11. An ultrasonic vibration unit according to claim 9 **characterised in that** the damping element (4) is arranged within the converter housing (2) and either is connected thereto over the entire contact surface or is pressed against the vibration absorber unit (2) by means of a clamping element.

12. An ultrasonic vibration unit according to claim 11 **characterised in that** the clamping element has a conical external contour and a damping element comprising an elastomer has a corresponding conical internal contour.

## Revendications

1. Unité émettrice d'ultrasons qui comprend un convertisseur (1) pour convertir une tension électrique alternative en une vibration mécanique ultrasonore et une sonotrode qui est reliée au convertisseur (1) par des oscillations, la sonotrode et le convertisseur (1) étant accordés l'un avec l'autre de façon que l'unité émettrice d'ultrasons puisse vibrer avec une fréquence propre f à laquelle se forme à l'intérieur de l'unité émettrice d'ultrasons une onde longitudinale stationnaire ayant au moins un noeud d'oscillation et au moins deux ventres d'oscillation, **caractérisée en ce qu'**il est prévu une unité d'amortissement d'oscillations (2) qui est reliée à l'unité émettrice d'ultrasons par un élément d'accouplement (3), l'élément d'accouplement (3) étant relié à l'unité émettrice d'ultrasons à un noeud d'oscillation, l'unité d'amortissement d'oscillations (2) étant reliée à un élément d'amortissement (4) qui est configuré de façon qu'il amortisse une oscillation de l'unité d'amortissement d'oscillations (2).

2. Unité émettrice d'ultrasons selon la revendication 1, **caractérisée en ce que** l'élément d'amortissement (4) est fait en un autre matériau que l'unité d'amortissement d'oscillations (2), de préférence, l'élément d'amortissement (4) étant fait en un élastomère.

3. Unité émettrice d'ultrasons selon la revendication 2, **caractérisée en ce que** l'élément d'amortissement (4) comprend une surface de contact par laquelle l'élément d'amortissement (4) est en contact avec l'unité d'amortissement d'oscillations (2), de préférence, la surface de contact étant supérieure à 2 cm², de façon particulièrement préférée, elle est supérieure à 10 cm² et le mieux supérieure à 20 cm².

4. Unité émettrice d'ultrasons selon la revendication 3, **caractérisée en ce que** l'élément d'amortissement (4) est disposé de façon qu'il exerce, par le biais de la surface de contact, un effort sur l'unité d'amortissement d'oscillations (2), de préférence, l'élément d'amortissement (4) exerçant, par le biais de la surface de contact, un effort en direction de l'unité d'amortissement d'oscillations (2).

5. Unité émettrice d'ultrasons selon l'une des revendications 1 à 4, **caractérisée en ce que** la masse de l'unité d'amortissement d'oscillations (2) est inférieure à 10 %, de préférence entre un pourcent et 8 % et le mieux entre 3 et 5 % de la masse de l'unité émettrice d'ultrasons.

6. Unité émettrice d'ultrasons selon l'une des revendications 1 à 5, **caractérisée en ce que** l'élément d'amortissement d'oscillations (4) est configuré et disposé de façon qu'il amortisse l'unité d'amortissement d'oscillations (2) avec un coefficient d'amortissement entre 5 % et 50 % et de préférence entre 7,5 % et 20 %.

7. Unité émettrice d'ultrasons selon l'une des revendications 1 à 6, **caractérisée en ce que** l'élément d'accouplement (3) est disposé au convertisseur (1).

8. Unité émettrice d'ultrasons selon la revendication 7, **caractérisée en ce que** le convertisseur (1) a une surface extérieure en forme d'enveloppe cylindrique, l'élément d'accouplement (3) étant configuré, au moins par zone, comme une bride qui est reliée à la surface extérieure en forme d'enveloppe cylindrique du convertisseur (1), de préférence, la bride étant réalisée en une seule pièce avec le convertisseur (1).

9. Unité émettrice d'ultrasons selon la revendication 7 ou la revendication 8, **caractérisée en ce que** l'unité d'amortissement d'oscillations (2) est configurée comme boîtier de convertisseur (2) qui entoure le convertisseur (1) à son extrémité opposée dans la sonotrode, de préférence, le boîtier de convertisseur (2) comprenant un fond de boîtier et une paroi de boîtier cylindrique, la paroi de boîtier cylindrique étant attachée à l'élément d'accouplement (3).

10. Unité émettrice d'ultrasons selon la revendication 9, **caractérisée en ce que** l'élément d'amortissement (4) a la forme d'une douille qui entoure le boîtier de convertisseur (2), l'élément d'amortissement (4) étant précontraint élastiquement de façon qu'il exerce un effort sur le boîtier de convertisseur (2).

11. Unité émettrice d'ultrasons selon la revendication 9, **caractérisée en ce que** l'élément d'amortissement (4) est disposé à l'intérieur du boîtier de convertisseur (2) et est relié à celui-ci soit par la surface de contact entière, soit est pressé sur l'unité d'amortissement d'oscillations (2) par un élément de serrage.

12. Unité émettrice d'ultrasons selon la revendication 11, **caractérisée en ce que** l'élément de serrage comprend des contours extérieurs en forme de cône et **en ce qu'**un élément d'amortissement en élastomère comprend des contours intérieurs correspondants en forme de cône.
